# EUROPEAN PATENT APPLICATION

(11) **EP 3 862 409 A1**
(43) Date of publication of application: **11.08.2021**
(21) Application number: 19868367.4
(22) Date of filing: 01.10.2019
(51) Int. Cl.: C09K 5/06

(54) **COMPOSITION FOR STORING LATENT HEAT**

(30) Priority: 02.10.2018 KR 20180117894
(71) Applicant: OCI Company Ltd., Seoul 04532 (KR)
(72) Inventor: LEE, Seungyeon, Seongnam-si Gyeonggi-do 13212 (KR); JUNG, Youngsoo, Seongnam-si Gyeonggi-do 13212 (KR); JEE, Eun Ok, Seongnam-si Gyeonggi-do 13212 (KR)
(74) Representative: Shearman, James Ward
(86) International application number: PCT/KR2019/012843
(87) International publication number: WO 2020/071737

(57) **Abstract**

The present invention relates to a latent heat storage composition, and more particularly, the latent heat storage composition is composed of a mixture of a first phase change material and a second phase change material, and fumed silica. The first phase change material and the second phase change material each independently includes a fatty acid and esters thereof, and a weight ratio of the fumed silica is from 5 wt% to 15 wt%.

## Description

### TECHNICAL FIELD

The present invention disclosed herein relates to a latent heat storage composition, and more particularly, to a latent heat storage composition including a mixture of phase change materials.

### BACKGROUND ART

Latent heat means heat absorbed or released by a substance during phase change from a solid phase to a liquid phase or from a liquid phase to a solid phase. Phase change materials mean substances which absorb and/or release heat using such latent heat.

The phase change material has large storage capacity of thermal energy per unit volume and unit mass and has merits of greatly reducing its volume or weight compared to a sensible heat apparatus. The phase change material has not severe thermocline phenomenon and has the merits of heat storing and heat dissipating at almost constant temperature in a range suitable to the using temperature.

Since the phase change material has a liquid phase at a temperature higher than the melting point thereof, the phase change material is put in a plastic case of which shape does not change for packaging, and used. However, the plastic case has demerits of having high production cost and being relatively heavy.

### DISCLOSURE OF THE INVENTION

### TECHNICAL PROBLEM

The task for solving of the present invention is to provide a latent heat storage composition which does not flow and has a semisolid state.

Another task for solving of the present invention is to provide a latent heat storage composition including a mixture of phase change materials uniformly mixed.

### TECHNICAL SOLUTION

A latent heat storage composition according to the inventive concept is consisted of a mixture of a first phase change material and a second phase change material; and fumed silica, wherein the first phase change material and the second phase change material each independently includes a fatty acid or esters thereof, and a weight ratio of the fumed silica may be from 5 wt% to 15 wt%.

A latent heat storage composition according to another inventive concept includes a first phase change material and a second phase change material, wherein the first phase change material includes a compound of C_{X}H_{2X+1}COOR1, the second phase change material includes a compound of C_{Y}H_{2Y+1}COOR1, X and Y are different integers, each of X and Y is an integer of 11 to 17, and R1 of the first phase change material and R1 of the second phase change material may be the same and C1-C4 alkyl.

### ADVANTAGEOUS EFFECTS

The latent heat storage composition according to the present invention may largely improve viscosity while maintaining the physical properties such as the melting point and latent heat of a phase change material composing the composition as they are. Accordingly, the latent heat storage composition may be in a nonflowing semisolid state at a temperature higher than the melting point of the phase change material. Since the latent heat storage composition may maintain its shape in a latent heat storage pack, the treatment of the latent heat storage pack may be easy.

Further, the latent heat storage composition according to the present invention may form a uniform mixture having a desired melting point and latent heat by mixing two phase change materials selected from the compound group consisting of a fatty acid and esters thereof.

### BRIEF DESCRIPTION OF THE DRAWINGS

FIG. 1 is a cross-sectional view showing a latent heat storage pack according to embodiments of the present invention.
FIG. 2 is an enlarged diagram showing constituent materials of a latent heat storage composition in FIG. 1 according to an embodiment of the present invention.
FIG. 3 is a cross-sectional view showing a latent heat storage pack according to another embodiment of the present invention.
FIG. 4A is a graph showing DSC analysis results of a mixture according to the First Experimental Example of the present invention.
FIG. 4B is a graph showing latent heat according to the composition of a mixture according to the First Experimental Example of the present invention.
FIG. 5A is a graph showing DSC analysis results of a mixture according to the Second Experimental Example of the present invention.
FIG. 5B is a graph showing latent heat according to the composition of a mixture according to the Second Experimental Example of the present invention.
FIG. 6A is a graph showing DSC analysis results of a mixture according to the Third Experimental Example of the present invention.
FIG. 6B is a graph showing latent heat according to the composition of a mixture according to the Third Experimental Example of the present invention.

### MODE FOR CARRYING OUT THE INVENTION

For sufficient understanding on the configuration and effects of the present invention, preferred embodiments of the present invention will be described with reference to the accompanying drawings. However, the present invention should not be constructed as limited to the embodiments set forth herein, but may be embodied in various types, and diverse modifications may be made. Rather, these embodiments are provided so that this disclosure will be thorough and complete, and will fully convey the scope of the present invention to those skilled in the art.

The terms used in the description are to describe embodiments but not intended to limit the present invention. In the description, the singular forms are intended to include the plural forms as well, unless the context clearly indicates otherwise. It will be understood that the terms "comprises" and/or "comprising," used in this description, do not preclude the presence or addition of one or more other constituent elements.

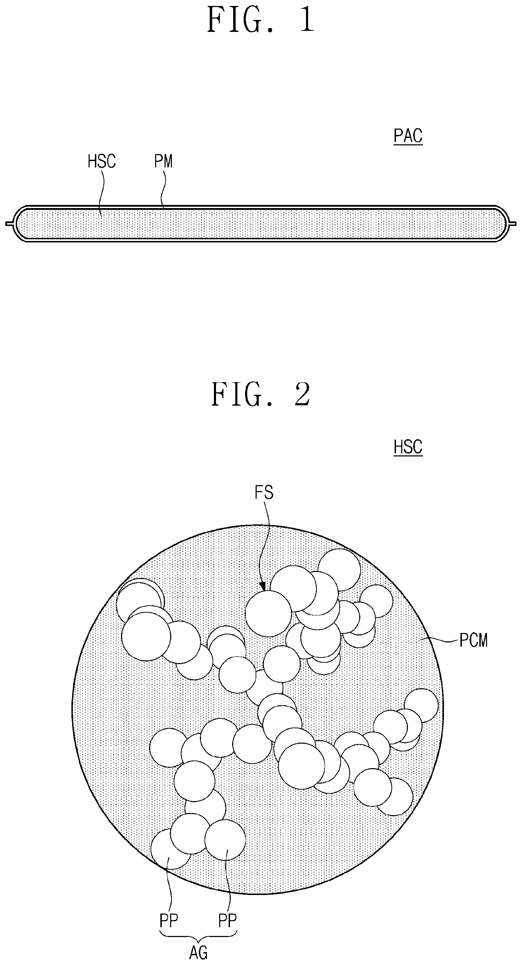

FIG. 1 is a cross-sectional view showing a latent heat storage pack according to embodiments of the present invention. Referring to FIG. 1, a latent heat storage pack (PAC) may include a latent heat storage composition (HSC) and a package material (PM) enclosing the latent heat storage composition (HSC). For example, the package material (PM) may include at least one selected from the group consisting of polyethylene (PE), linear low-density polyethylene (LLDPE), polypropylene (PP), polyvinyl chloride (PVC) and polyethylene terephthalate (PET). The package material (PM) of the latent heat storage pack (PAC) may be a thin film. Accordingly, the weight of the latent heat storage pack (PAC) may be reduced, and the production cost may be lowered.

The latent heat storage composition (HSC) according to a first embodiment of the present invention may include a first phase change material and a second phase change material. In other words, the latent heat storage composition (HSC) may include a mixture of the first phase change material and the second phase change material.

The phase change material may be a material having a melting point or a freezing point in a range between -30°C and 30°C. The phase change material may absorb heat during phase change from a solid into a liquid at the melting point. The phase change material may release heat during phase change from a liquid into a solid at the freezing point. While the phase change material changes its phase at the melting point or freezing point, the temperature of the phase change material may be maintained constant. While the phase change material changes its phase at the melting point or freezing point, the temperature of the phase change material may change a little.

The first phase change material and the second phase change material according to embodiments of the present invention may include at least one among a fatty acid and esters thereof. The first phase change material and the second phase change material may each independently include a compound of C_{X}H_{2X+1}COOR1. X may be an integer of 11 to 17, and R1 may be hydrogen or C1-C4 alkyl. For example, the first phase change material and the second phase change material may be each independently selected from the group consisting of lauric acid or esters thereof, myristic acid or esters thereof, palmitic acid or esters thereof, and stearic acid or esters thereof.

In an embodiment of the present invention, the first phase change material may be a compound of C_{X}H_{2X+1}COOR1, and the second phase change material may be a compound of C_{Y}H_{2Y+1}COOR1. Each of X and Y may be an integer of 11 to 17, and X and Y may have different values. R1 of the first phase change material and R1 of the second phase change material may be the same functional group, and may be hydrogen or C1-C4 alkyl. If the functional group (R1) of the first phase change material and the functional group (R1) of the second phase change material are the same, the first phase change material and the second phase change material may be mixed uniformly to form a eutectic mixture, which will be explained below.

The mixture of the first phase change material and the second phase change material may be a eutectic mixture. For example, if the melting point of the first phase change material is a first temperature, and the melting point of the second phase change material is a second temperature, the mixture of them may not have two melting points of the first temperature and the second temperature but have one melting point of a third temperature. In other words, the mixture of the first phase change material and the second phase change material may have one melting point (or one freezing point). The third temperature may be a value between the first temperature and the second temperature. The third temperature may be lower than the first temperature and/or the second temperature. The third temperature may be higher than the first temperature and/or the second temperature.

If the concentration of the first phase change material increases in the mixture, the melting point of the mixture may approach to the first temperature which is the melting point of the first phase change material. If the concentration of the second phase change material increases in the mixture, the melting point of the mixture may approach to the second temperature which is the melting point of the second phase change material. As a result, by controlling the composition ratio of the first phase change material and the second phase change material, the latent heat storage composition (HSC) may be controlled to have a desired melting point or freezing point.

### <First Experimental Example>

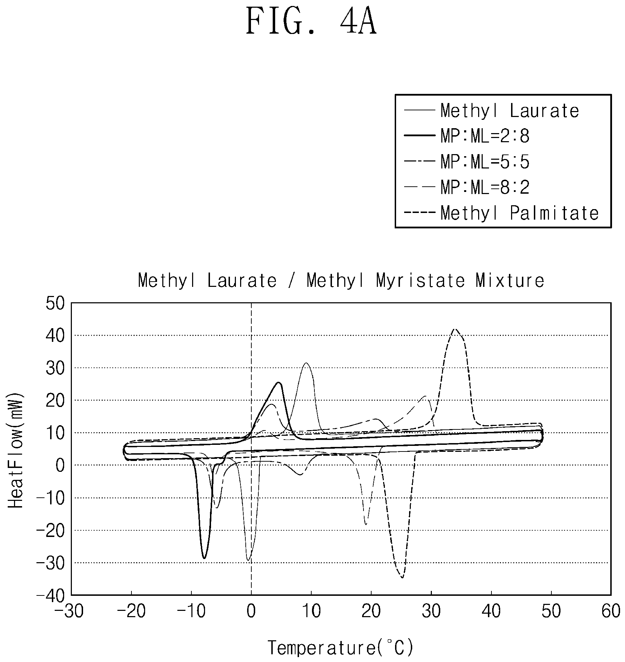

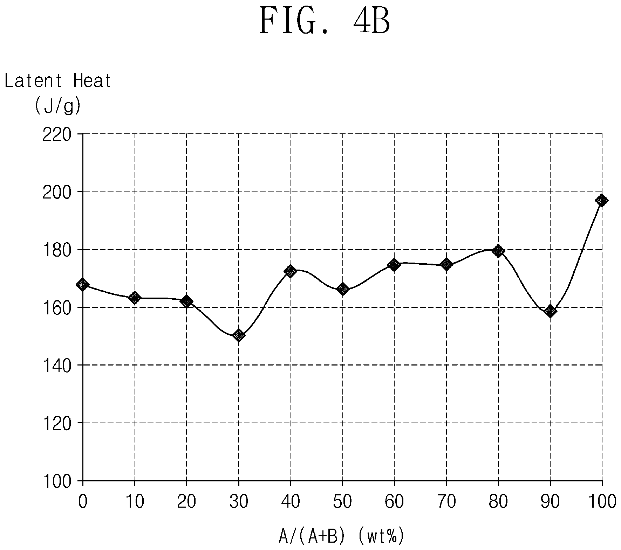

Mixtures were prepared by mixing methyl palmitate as a first phase change material (A) and methyl laurate as a second phase change material (B) in weight ratios of 0:10, 1:9, 2:8, 3:7, 4:6, 5:5, 6:4, 7:3, 8:2, 9:1 and 10:0. With respect to the mixtures, differential scanning calorimetry (DSC) analysis was performed, and the results are shown in FIG. 4A and Table 1 below. Data on latent heat in Table 1 are shown as a graph in FIG. 4B.

**[Table 1]**

| A/(A+B) (wt%) | Melting point (°C) | Latent heat (J/g) |
|---|---|---|
| 0 | 5.98 | 167.44 |
| 10 | 0.42 | 163.02 |
| 20 | -0.72 | 161.84 |
| 30 | -0.45 | 150.19 |
| 40 | -0.7 | 172.34 |
| 50 | -0.45 | 165.9 |
| 60 | -1.35 | 174.58 |
| 70 | 4.92 | 174.71 |
| 80 | 22.74 | 179.11 |
| 90 | 25.75 | 158.6 |
| 100 | 30.22 | 196.76 |

Referring to FIG. 4A, FIG. 4B and Table 1, it could be confirmed that the melting point of the mixture changed from the melting point (30.22°C) of the first phase change material (A) and the melting point (5.98°C) of the second phase change material (B). Within a range of 10% to 70% of the composition ratio of the mixture (A/(A+B)), it could be confirmed that the melting point of the mixture was lowered compared to the melting point (5.98°C) of the second phase change material (B). It was confirmed that the latent heat of the mixture was not changed much in a range between the latent heat (196.76 J/g) of the first phase change material (A) and the latent heat (167.44 J/g) of the second phase change material (B).

### <Second Experimental Example>

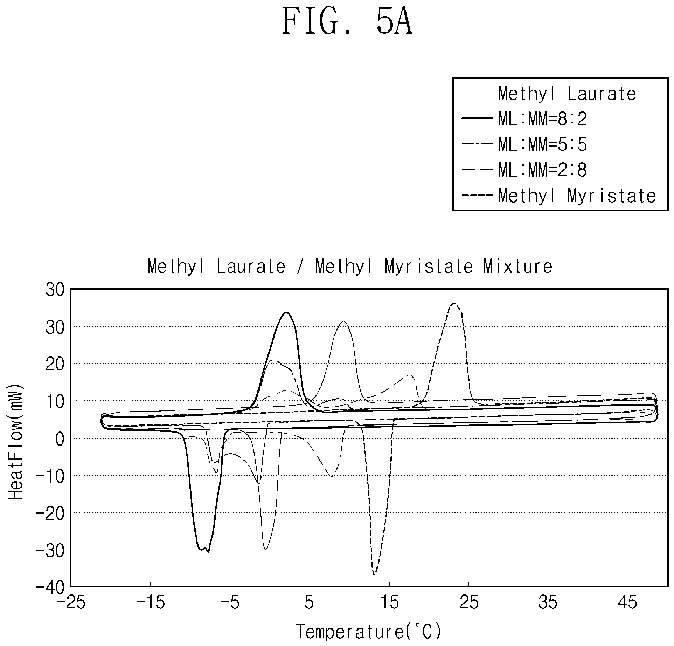

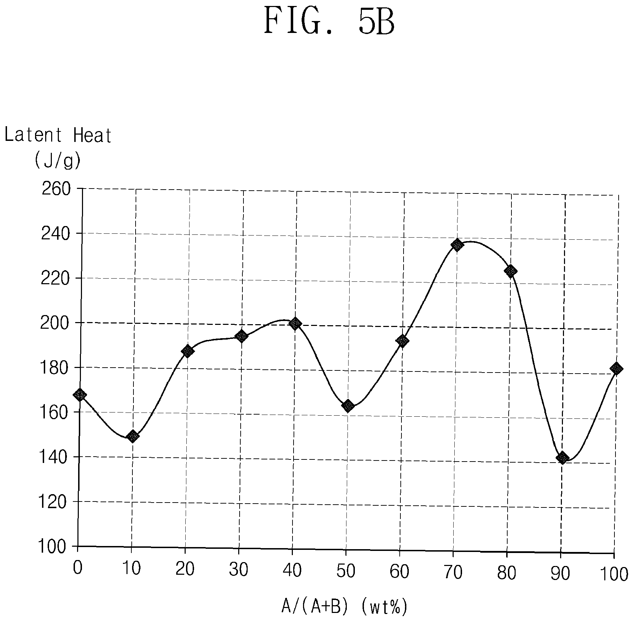

Mixtures were prepared by mixing methyl myristate as a first phase change material (A) and methyl laurate as a second phase change material (B) in weight ratios of 0:10, 1:9, 2:8, 3:7, 4:6, 5:5, 6:4, 7:3, 8:2, 9:1 and 10:0. With respect to the mixtures, differential scanning calorimetry (DSC) analysis was performed, and the results are shown in FIG. 5A and Table 2 below. Data on latent heat in Table 2 are shown as a graph in FIG. 5B.

**[Table 2]**

| A/(A+B) (wt%) | Melting point (°C) | Latent heat (J/g) |
|---|---|---|
| 0 | 5.98 | 167.44 |
| 10 | -1.14 | 149.32 |
| 20 | -2.32 | 187.49 |
| 30 | -2.04 | 194.81 |
| 40 | -2.31 | 200.65 |
| 50 | -2.28 | 164.16 |
| 60 | -2.41 | 193.75 |
| 70 | -2.22 | 236.91 |
| 80 | -2.85 | 225.05 |
| 90 | 13.08 | 142 |
| 100 | 19.22 | 182.29 |

Referring to FIG. 5A, FIG. 5B and Table 2, it could be confirmed that the melting point of the mixture changed from the melting point (19.22°C) of the first phase change material (A) and the melting point (5.98°C) of the second phase change material (B). In other words, it could be confirmed that the melting point of the mixture was lowered compared to the melting point (5.98°C) of the second phase change material (B). Within a range of 20% to 40% and 60% to 80% of the composition ratio of the mixture (A/(A+B)), it could be confirmed that the latent heat of the mixture was raised from the latent heat (182.29 J/g) of the first phase change material (A). As a result, it was confirmed that since the mixture in a specific composition ratio had further improved latent heat than a single case of the first phase change material (A) or a single case of the second phase change material (B), if utilized in a latent heat storage composition, even higher efficiency could be achieved.

### <Third Experimental Example>

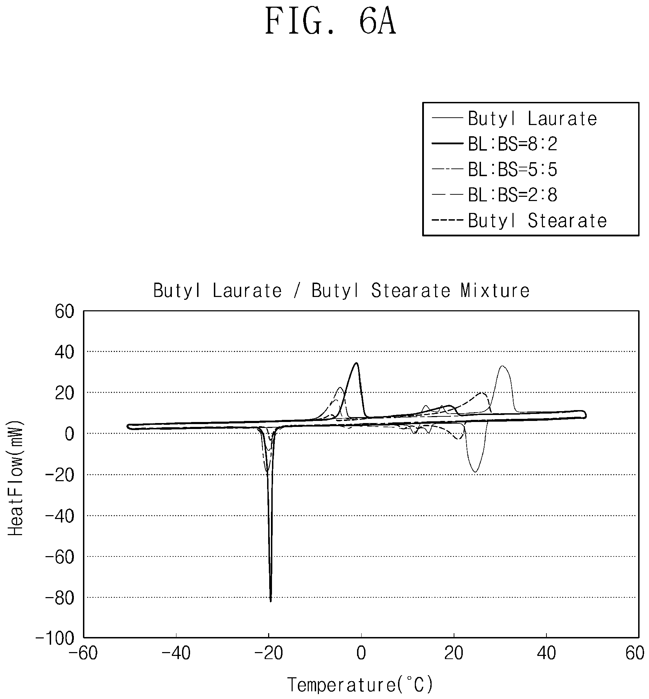

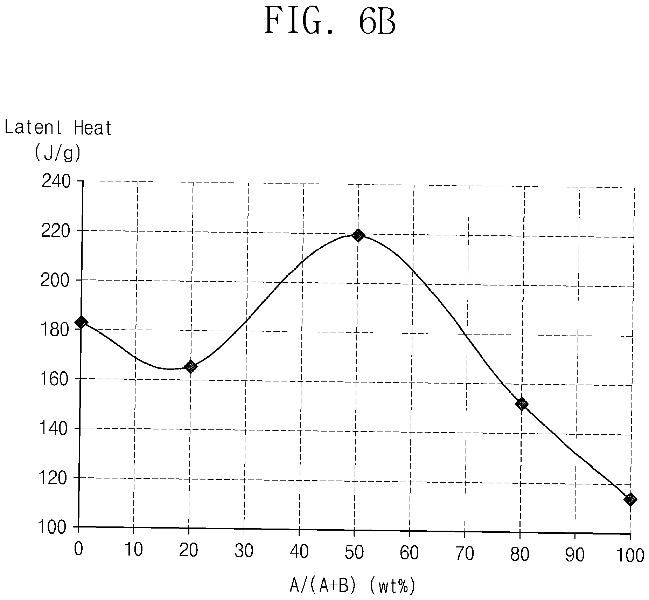

Mixtures were prepared by mixing butyl stearate as a first phase change material (A) and butyl laurate as a second phase change material (B) in weight ratios of 0:10, 2:8, 5:5, 8:2 and 10:0. With respect to the mixtures, differential scanning calorimetry (DSC) analysis was performed, and the results are shown in FIG. 6A and Table 3 below. Data on latent heat in Table 3 are shown as a graph in FIG. 6B.

**[Table 3]**

| A/(A+B) (wt%) | Melting point (°C) | Latent heat (J/g) |
|---|---|---|
| 0 | -5.02 | 182.77 |
| 20 | -8.6 | 165.53 |
| 50 | -9.52 | 219.3 |
| 80 | 19.14 | 151.79 |
| 100 | 27.79 | 113.76 |

Referring to FIG. 6A, FIG. 6B and Table 3, it could be confirmed that the melting point of the mixture changed from the melting point (27.79°C) of the first phase change material (A) and the melting point (-5.02°C) of the second phase change material (B). Within a range of 20% to 50% of the composition ratio of the mixture (A/(A+B)), it could be confirmed that the melting point of the mixture was lowered compared to the melting point (-5.02°C) of the second phase change material (B). Within a range of 30% to 70% of the composition ratio of the mixture (A/(A+B)), it could be confirmed that the latent heat of the mixture was raised from the latent heat (182.77 J/g) of the second phase change material (B). As a result, it was confirmed that since the mixture in a specific composition ratio had further improved latent heat than a single case of the first phase change material (A) or a single case of the second phase change material (B), if utilized in a latent heat storage composition, even higher efficiency could be achieved.

FIG. 2 is an enlarged diagram showing constituent materials of a latent heat storage composition in FIG. 1 according to an embodiment of the present invention.

Referring to FIG. 1 and FIG. 2, the latent heat storage composition (HSC) according to a second embodiment of the present invention may include a mixture (PCM) of a first phase change material and a second phase change material, and fumed silica (FS). In an embodiment, the latent heat storage composition (HSC) may be composed of only a mixture (PCM) of a first phase change material and a second phase change material, and fumed silica (FS). The mixture (PCM) of the first phase change material and the second phase change material may be substantially the same as that explained through the first embodiment above.

The latent heat storage composition (HSC) may not include an additional material other than the mixture (PCM) and the fumed silica (FS). If the latent heat storage composition (HSC) includes an additional material, the additional material may influence the phase change characteristics (for example, melting point and latent heat) of the mixture (PCM).

The fumed silica (FS) may include amorphous silicon dioxide. If the fumed silica (FS) is present solely, it may be a white powder type. The fumed silica (FS) may be hydrophilic. The average diameter of primary particles (PP) constituting the fumed silica (FS) may be from 5 nm to 50 nm. The specific surface area of the primary particle (PP) may be from 50 m²/g to 600 m²/g.

The fumed silica (FS) may be formed by the hydrolysis of chlorosilane in flame of 1000°C or higher formed with oxygen and hydrogen. As the primary particles (PP) are connected to each other due to collisions between the primary particles (PP) formed in the flame, an aggregate (AG) may be formed. In other words, the aggregate (AG) may include a plurality of primary particles (PP). The aggregate (AG) may have a three-dimensional structure. The size of the aggregate (AG) may be from 1 µm to 500 µm.

Since the mixture (PCM) according to this embodiment is selected from the compound group consisting of a fatty acid and esters thereof, the mixture (PCM) may be hydrophilic. Since the fumed silica (FS) is also hydrophilic, the mixture (PCM) and the fumed silica (FS) may be mixed well.

In the three-dimensional branch structure of the fumed silica (FS), the mixture (PCM) may be trapped. In other words, the aggregate (AG) of the fumed silica (FS) may be a support, and the mixture (PCM) may surround the aggregate (AG). At a temperature higher than the melting point of the mixture (PCM), the mixture (PCM) may be a liquid state. In this embodiment, the aggregate (AG) of the fumed silica (FS) may trap the mixture (PCM). Accordingly, the latent heat storage composition (HSC) may have a semisolid state at a temperature higher than the melting point of the mixture (PCM). The latent heat storage composition (HSC) may be a solid state at a temperature lower than the melting point of the mixture (PCM).

The term "semisolid state" used in the description of the present invention may mean a state of a material hardly flowing but maintain its shape. The semisolid state may be a gel-like state. The composition of the semisolid state may have a viscosity of 10 cp to 200 cp. In other words, the viscosity of the latent heat storage composition (HSC) at a temperature higher than the melting point of the mixture (PCM) may be from 10 cp to 200 cp.

If the latent heat storage composition (HSC) is composed of only a first phase change material and a second phase change material as in the First Experimental Example, the latent heat storage composition (HSC) may be a liquid state at a temperature higher than the melting point of the mixture. In this case, the shape of a latent heat storage pack (PAC) may easily change.

Meanwhile, the latent heat storage composition (HSC) according to the second embodiment may be present not in a liquid state but in a semisolid state at a temperature higher than the melting point of the mixture (PCM). Accordingly, the shape of the latent heat storage pack (PAC) may be maintained without a great change at a temperature higher than the melting point of the mixture (PCM), and the treatment of the latent heat storage pack (PAC) may become easy. Further, though the package material (PM) of the latent heat storage pack (PAC) is partially broken, the flowing out of the latent heat storage composition (HSC) may be prevented.

The weight ratio of the fumed silica (FS) may be from 5 wt% to 15 wt% based on the total weight of the latent heat storage composition (HSC). If the weight ratio of the fumed silica (FS) is smaller than 5 wt%, the latent heat storage composition (HSC) may flow similar to a liquid at a temperature higher than the melting point (for example, a viscosity smaller than 10 cp). Thus, the shape of the latent heat storage pack (PAC) may change. If the weight ratio of the fumed silica (FS) is greater than 15 wt%, silica powders not mixed uniformly in the latent heat storage composition (HSC) may remain. Further, energy storable per unit mass of the latent heat storage composition (HSC) may be reduced.

The difference between the melting point of the latent heat storage composition (HSC) and the melting point of the mixture (PCM) may be from 0.01°C to 0.5°C. In other words, though the fumed silica (FS) is mixed with the mixture (PCM), the physical properties (for example, melting point and latent heat) of the mixture (PCM) excluding viscosity may be substantially unchanged.

The formation of the latent heat storage composition (HSC) may include mixing of the mixture (PCM) of the phase change materials and the fumed silica (FS). Particularly, by mixing the mixture (PCM) with the fumed silica (FS) in a liquid state, the latent heat storage composition (HSC) may be formed. In other words, at a temperature higher than the melting point of the mixture (PCM), the mixture (PCM) and the fumed silica (FS) may be mixed uniformly to form the latent heat storage composition (HSC).

Referring to FIG. 1 again, the latent heat storage composition (HSC) according to a third embodiment of the present invention may include a mixture of a first phase change material and a second phase change material, and a super absorbent polymer. For example, the latent heat storage composition (HSC) may be composed of only the mixture of the phase change materials, and the super absorbent polymer. The mixture of the phase change materials may be substantially the same as that explained through the first embodiment above.

The super absorbent polymer may be particles capable of absorbing water by 40 to 1,000 times the weight thereof. For example, the super absorbent polymer may include at least one selected from the group consisting of a polyacrylic acid, a starch crosslinked polyacrylic acid, a hydrolyzed starch-acrylonitrile graft polymer, a saponified vinyl acetate-acrylic acid ester polymer, a starch-acrylic acid graft polymer, a hydrolyzed acrylonitrile polymer, a sodium acrylate polymer, a sodium methacrylate polymer, a hydrolyzed acryl amide polymer, a hydrolyzed acrylonitrile polymer, an acrylic acid methacrylic acid copolymer, and an acrylic acid acryl amide copolymer.

In this embodiment, the mixture of the phase change materials may be captured with the particles of the super absorbent polymer as a center. Accordingly, the latent heat storage composition (HSC) may have a semisolid state at a temperature higher than the melting point of the mixture.

In this embodiment, the weight ratio of the super absorbent polymer may be from 0.5 wt% to 5 wt% based on the total weight of the latent heat storage composition (HSC).

The formation of the latent heat storage composition (HSC) in this embodiment may include mixing of the mixture of phase change materials and the super absorbent polymer. Particularly, by mixing the mixture and the super absorbent polymer in a liquid state, the latent heat storage composition (HSC) may be formed.

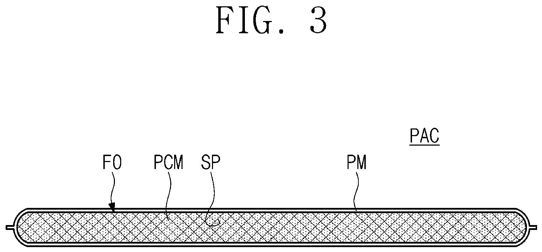

FIG. 3 is a cross-sectional view showing a latent heat storage pack according to another embodiment of the present invention. Referring to FIG. 3, a latent heat storage pack (PAC) may include a foam (FO), a mixture (PCM) infiltrated or absorbed in the foam (FO), and a package material (PM) enclosing the foam (FO). The mixture (PCM) may include a first phase change material and a second phase change material, and the explanation thereon may be substantially the same as that explained through the first embodiment above.

The foam (FO) may include spaces (SP) which are capable of storing the mixture (PCM) therein. The foam (FO) may have a sponge shape. In the package material (PM), the foam (FO) may maintain a certain shape. Since the foam (FO) serves as a support, the shape of the latent heat storage pack (PAC) may be maintained without significant deformation even at a temperature higher than the melting point of the mixture (PCM). In an embodiment, the foam (FO) may include polyurethane. The mixture (PCM) may be stored in the spaces (SP) in the foam (FO).

## Claims

1. A latent heat storage composition consisting of:
a mixture of a first phase change material and a second phase change material; and
fumed silica,
wherein the first phase change material and the second phase change material each independently comprises a fatty acid or esters thereof, and
a weight ratio of the fumed silica is from 5 wt% to 15 wt%.

2. The latent heat storage composition of claim 1, having a viscosity of 10 cp to 200 cp at a temperature higher than a melting point of the mixture.

3. The latent heat storage composition of claim 1, wherein the fumed silica comprises an agglomerate formed through connection of primary particles, and
the mixture surrounds the agglomerate.

4. The latent heat storage composition of claim 3, wherein the agglomerate has a three-dimensional branch structure, and
the mixture is trapped in the three-dimensional branch structure.

5. The latent heat storage composition of claim 1, wherein the mixture has a first melting point,
the latent heat storage composition has a second melting point, and
a difference between the first melting point and the second melting point is from 0.01°C to 0.5°C.

6. A latent heat storage composition comprising a first phase change material and a second phase change material, wherein
the first phase change material comprises a compound of C_{X}H_{2X+1}COOR1,
the second phase change material comprises a compound of C_{Y}H_{2Y+1}COOR1,
X and Y are different integers, each of X and Y is an integer of 11 to 17, and
R1 of the first phase change material and R1 of the second phase change material are the same and C1-C4 alkyl.

7. The latent heat storage composition of claim 6, wherein
the first phase change material comprises methyl myristate,
the second phase change material comprises methyl laurate, and
a weight ratio of the first phase change material in the mixture is from 20 wt% to 40 wt% and from 60 wt% to 80 wt%.

8. The latent heat storage composition of claim 6, wherein
the first phase change material comprises butyl stearate,
the second phase change material comprises butyl laurate, and
a weight ratio of the first phase change material in the mixture is from 30 wt% to 70 wt%.

9. The latent heat storage composition of claim 6, further comprising fumed silica, and
a weight ratio of the fumed silica is from 5 wt% to 15 wt%.

10. The latent heat storage composition of claim 6, further comprising a super absorbent polymer,
the super absorbent polymer comprises at least one selected from the group consisting of a polyacrylic acid, a starch crosslinked polyacrylic acid, a hydrolyzed starch-acrylonitrile graft polymer, a saponified vinyl acetate-acrylic acid ester polymer, a starch-acrylic acid graft polymer, a hydrolyzed acrylonitrile polymer, a sodium acrylate polymer, a sodium methacrylate polymer, a hydrolyzed acryl amide polymer, a hydrolyzed acrylonitrile polymer, an acrylic acid methacrylic acid copolymer, and an acrylic acid acryl amide copolymer, and
a weight ratio of the super absorbent polymer is from 0.5 wt% to 5 wt%.

11. The latent heat storage composition of claim 6, further comprising a foaming agent, and
the foaming agent comprises spaces which are capable of storing the mixture therein.
